# EUROPEAN PATENT APPLICATION

(11) **EP 4 730 575 A2**
(43) Date of publication of application: **22.04.2026**
(21) Application number: 26151675.1
(22) Date of filing: 28.06.2019
(51) Int. Cl.: H01S 3/16

(54) **HIGH-POWER YTTERBIUM:ERBIUM (YB:ER) FIBER LASER SYSTEM WITH 1.02 -1.06 UM CLAD PUMPING SCHEME**

(30) Priority: 29.06.2018 US 201862691935 P
(62) Divisional of application: 19826333.7
(71) Applicant: IPG Photonics Corporation, Marlborough, MA 01752 (US)
(72) Inventor: ZAYTSEV, Ilya, Oxford, 01540 (US); SHCHERBINA, Fedor, Oxford, 01540 (US); MASHKIN, Andrey, Oxford, 01540 (US)
(74) Representative: Kobiako von Gamm, Iouri

(57) **Abstract**

A fiber laser is configured with a double clad fiber with a core doped with ions of Erbium (Er⁺³) and Ytterbium (Yb⁺³). At least two spaced apart high and low reflection mirrors flank the core and define a resonant cavity therebetween. The fiber laser further includes a pump laser outputting light in a 1.02 - 1.06 µm wavelength range which is coupled into the Yb:Er doped double clad fiber.

A fiber amplifier includes a double clad fiber with a core doped with ions of Erbium (Er⁺³) and Ytterbium (Yb⁺³), and a pump laser generating radiation at a pump wavelength in a 1.02 -1.06 µm wavelength range, a pump laser outputting light in a 1.02 - 1.06 µm wavelength range coupled into the Yb:Er doped double clad fiber.

The disclosed fiber laser and fiber amplifier each have a significantly higher lasing threshold in the 1 µm wavelength range than the threshold of the known schematics operating at a 9xx nm pump wavelength.

## Description

### BACKGROUND OF THE DISCLOSURE

### Field of the Disclosure

The disclosure relates to a high-power Yb:Er fiber laser system with the suppressed onset of Yb lasing in a 1 micron nm wavelength range. In particular, the disclosure relates to a high power fiber oscillator and amplifier based on Yb:Er doped fiber which is clad pumped in 1020 - 1060 nm wavelength range.

### Background Art Discussion

There is a demand for high power, practical and low-cost erbium (Er)-doped double clad fiber laser systems operating in a 1.5 - 1.6 µm wavelength range. The laser operation in this wavelength range is attractive for several reasons: it is excellent for pumping thulium (Tm) laser systems, mid-IR parametric amplifiers and oscillators; furthermore, it has a low fiber loss making high-power Er lasers highly advantageous in many scientific and engineering applications.

The most common laser transition in the Er is centered at around 1550 nm. The overwhelmingly popular pumping arrangement for Er-based laser systems operates at around 980 nm pump wavelength and is widely exploited in Er fiber systems. However, the Er fiber devices pumped at a 9xx nm wavelength range may not have a sufficient power meeting the ever growing industrial demands. The main reason limiting the power scaling of Er fiber devices is the lack of high power single mode (SM) power sources. Typically, the known SM power sources are based on diode lasers the power of which does not exceed 2 - 3 W. Another limitation stems from the fact that Er ion doping concentration is the relatively low for the following reasons. Firstly, at high Er concentrations, the luminescence may be quenched by energy transfer processes due to the interaction between Er ions and OH⁻. Secondly, it is a well-known "concentration quenching" process which de-excite Er ions through electrostatic dipole-dipole interaction. This phenomenon is responsible for the reduced efficiency and gain. Besides, another cooperative upconversion process occurs if a high pump power is applied which leads to highly undesirable photodarkening causing fiber degradation.

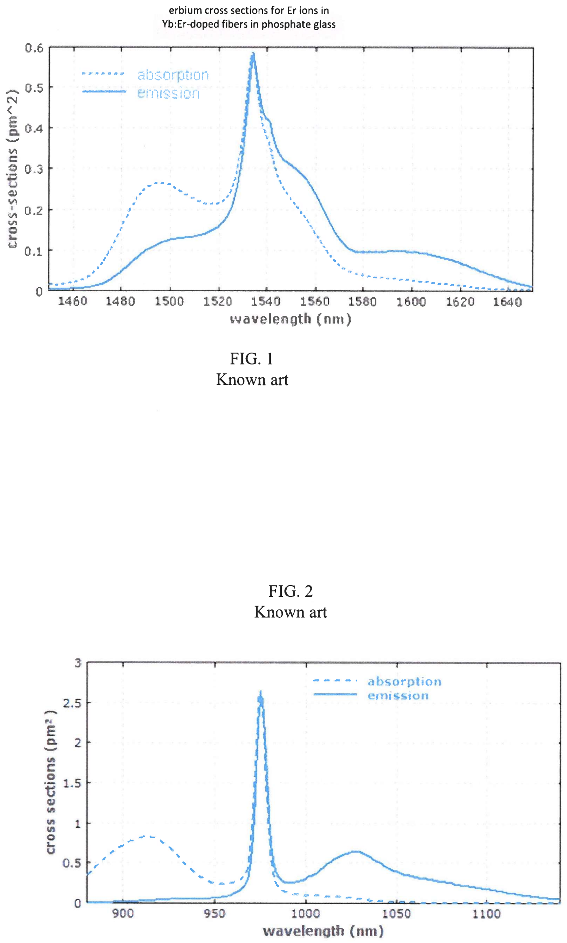

Co-doping Er⁺³ with Yb⁺³, which acts as a sensitizer, has been used to circumvent the relatively low pump absorption in Er fibers increasing Er laser and Er amplifier power scaling. The Yb ion has a simple electronic structure with only one metastable state above the ground state, a broad absorption spectrum, and high absorption and emission cross-sections, as shown in FIG. 2 for silica fibers. Unlike Er, Yb may and is used in high doping concentrations allowing for the utilization of a clad pumping scheme by high power MM diode lasers. The pumping can, in principle, be done in a broad wavelength range from 910 nm to 1064 nm. The large absorption cross-section, particularly at the 976 nm, enables high pump absorption leading to relatively short fiber lengths.

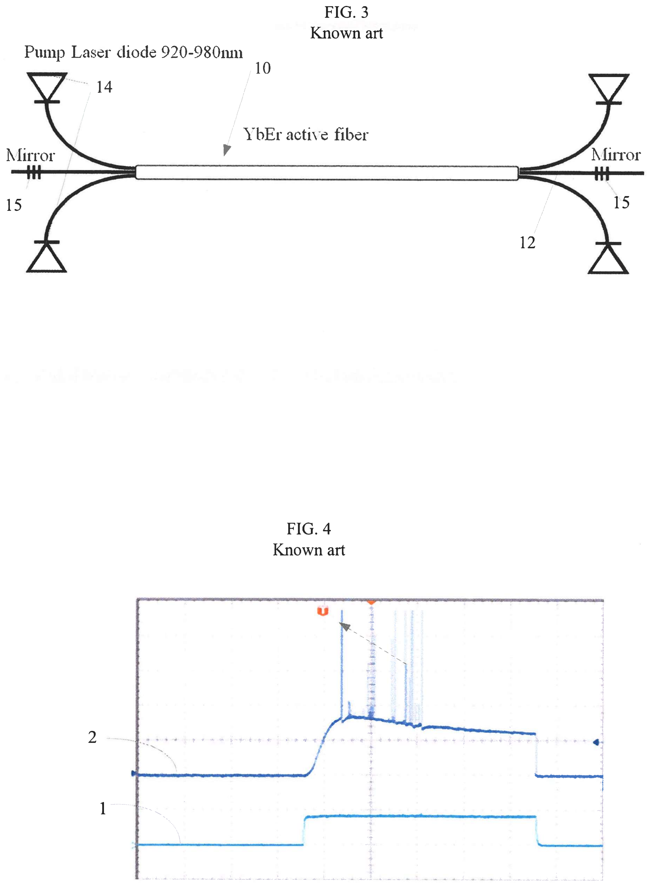

FIG. 3 illustrates a typical schematic of high power fiber system configured with an Er laser 10 with an Yb:Er co-doped double clad (DC) fiber 12 which is placed within an optical resonator defined between high and low reflection mirrors 15. The Yb:Er laser is bi-directionally side pumped at 9xx nm wavelength by a diode laser-based pump 14. In operation, pump light is launched and confined into the inner cladding and spatially overlaps the core of fiber 12. Yb⁺³ ions absorb pump photons over the entire length of fiber 12 while resonantly transferring its energy to Er⁺³ ions. The fiber 12 is the phosphor-silicate glass considered to be an excellent host for an Yb³⁺ Er³⁺ co-doped system by virtue of its high emission cross-section. The larger phonon energy in the phosphate host increases the transition probability for the desired relaxation which prevents the energy transfer back from Er⁺³ to Yb⁺³. Also, the large spectral overlap between the Yb emission spectrum and Er absorption spectrum, the energy transfer efficiency from Yb³⁺ to Er³⁺ in phosphor-silicate fibers can reach 95%.

There are a number of limiting factors that hinder the power scaling of laser 12 with pump arrangement 14 of FIG. 3 operating in a 9xx nm wavelength range. One of these limitations is the parasitic Yb emission in a 1 µm wavelength range which may irreparably damage fiber 12 of Yb:Er fiber laser due to the unwanted high gain coefficient in this wavelength range. FIG. 4 illustrates the parasitic generation in Yb:Er fiber laser 10 of FIG. 2 in a 1 µm wavelength range. The bottom graph 1 illustrates the Er output pulse at 1570 nm. The top graph 2 illustrates the superluminescence signal of Yb with lasing peaks in the 1 µm wavelength range.

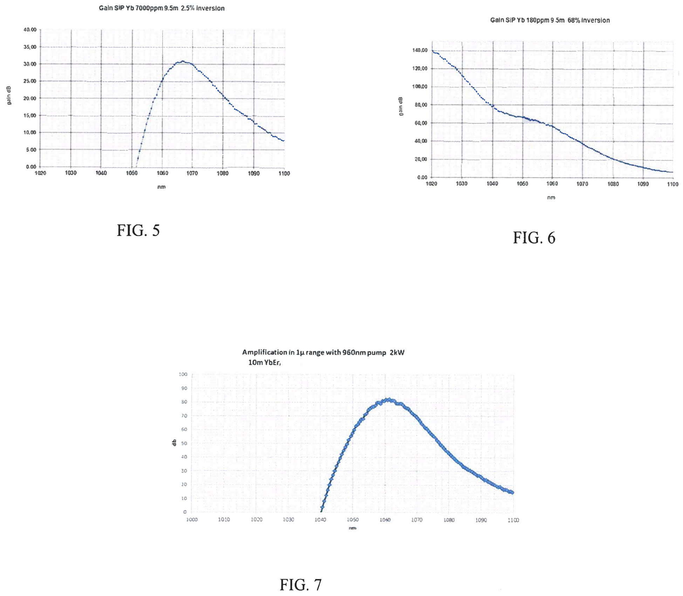

One of the factors explaining the unwanted emission in the 1 µm wavelength range is the presence of a limited quantity of Yb ions isolated from Er ions in the fiber's core that do not participate in energy transfer to Er ions Typically, isolated Yb ions constitute no more than a few percent of the total amount of Yb ions. However, the isolated Yb ions contribute to the total unwanted population inversion incomparably greater than the Yb ions, which participate in energy transfer at the 9xx pump wavelength, as can be seen by comparing the gain spectra in respective FIGs. 5 and 6. The high gain of Yb ions in the 1 µm wavelength range is a typical unwanted phenomenon in Yb:Er fiber laser systems.

Still another factor affecting the power scaling is the parasitic generation in the 1 µm wavelength range. As the temperature of active fibers increases, the coefficient of absorption in this wavelength range and the velocity of transition between Er and Yb ions also increase. But if the latter conditions are not met, higher parasitic generation in the 1 µm wavelength range intensifies.

Based on the foregoing, there is a need for a high power efficient Yb:Er laser and amplifier characterized by low gain in the 1 µm wavelength range.

### SUMMARY OF THE DISCLOSURE

This need is met by the inventive high power Yb:Er fiber laser/amplifier by implementing at least one Yb fiber laser pumping a Yb:Er doped fiber in a 1 - 1.06 µm pump wavelength range.

Pumping Yb:Er doped fiber at the 1 - 1.06 µm pump wavelength range limits the population inversion of isolated Yb Ions to about 2 - 15 % by comparison with the 70 % population inversion at the 9xx nm pump wavelength. At the same time, the longer pump wavelength does not significantly affect the population inversion of Yb⁺³ ions partaking in energy transfer to Er⁺³ ions. With a small inversion population of isolated Yb⁺³ ions, the maximum gain coefficient in the 1 µm range at a1020-1060 nm pump wavelength is considerably lower than that at a 9xx nm pump wavelength. As a consequence, the inventive system has a significantly higher lasing threshold in the 1 µm wavelength range than the threshold of the known schematics operating at a 9xx nm pump wavelength.

More specifically, in accordance with one aspect of the disclosure, the inventive system is configured with an Yb:Er fiber laser. In particular, the fiber laser is based on Er:Yb co-doped double clad (DC) configuration pumped by a laser source which operates in a 1 -1.06 µm pump wavelength range. The pump light can be coupled into the pump cladding of the DC fiber in either one of forward and backward directions (relative to signal light propagation direction) or bidirectionally.

The disclosed Yb:Er DC fiber, outputting signal light around a 15xx nm wavelength, may be configured with a single mode (SM) core, low mode (LM) core which outputs signal light in a 15xx nm range having the M² under 5, and preferably lower than 2, or multimode (MM) fiber.

According to still another aspect, the disclosed pump laser may be either SM or MM. Furthermore, the technique of pumping the Yb:Er fiber may be either side or end pumping. The concrete pumping technique is subject to the task at hand and can be used with any or all features of the above mentioned aspects and features of the disclosed system.

In accordance with the following aspect of the disclosure, an Yb:Er system may be configured with an Yb laser pump which operates in 1000 - 1060 nm wavelength range, a seed outputting signal light at the desired 15xx - 16xx nm wavelength and one or more amplifying cascades. At least one of or both the seed and amplifier(s) are based on the Yb:Er fiber. In combination, the seed and amplifier constitute a master oscillator power fiber-amplifier (MOPFA) architecture.

The Yb pump fiber laser as disclosed in all of the above aspects may selectively pump the seed source or fiber amplifier or both the seed source and amplifier in accordance with all of the above-disclosed pumping techniques. Furthermore, the disclosed Yb fiber pump can be used in combination with other pump configurations. For example, one of the seed and amplifier operates in combination with a diode laser-based pump, whereas the other uses the disclosed Yb fiber laser pump.

The disclosed above individual fiber laser and MOPFA configuration can be used as a Yb:Er pump for variously doped active mediums. One of the industrial applications of the Yb:Er pump includes pumping an Er fiber laser or amplifier which operates at a longer wavelength than that of the Yb:Er pump light. Still another application of the Yb:Er pump includes outputting pump light coupled into a thulium-doped (Tm) gain media.

The above-disclosed Yb:Er laser and MOPFA configuration can operate in different operating regimes. Namely, they can operate a continuous wave (CW), quasi CW (QCW) or pure pulsed regimes.

### BRIEF DESCRIPTION OF THE DRAWINGS

The above and other features and advantages will become more apparent from the specific description accompanied by the following drawings, in which:
FIG. 1 is the known absorption and emission cross-sections of Er⁺³ ions in Yb:Er phosphate glasses;
FIG. 2 is the known absorption and emission cross-sections of Yb⁺³ ions in silica glasses;
FIG. 3 is an optical schematic of the known Yb:Er laser pumped at a 9xx nm pump wavelength;
FIG. 4 illustrates an example of signal and parasitic generation at respective 1.5 µm and 1 µm wavelengths in Yb:Er QCW fiber laser.
FIG. 5 illustrates gain of Yb⁺³ ions participating in energy transfer to Er⁺³ in the Yb:Er fiber at a 9xx nm pump wavelength of FIG. 2;
FIG. 6 illustrates gain isolated Yb⁺³ ions in the Yb:Er fiber of the schematic of FIG. 2.
FIG. 7 illustrates is a total gain of all Yb⁺³ ions at parasitic in at 1 µm parasitic wavelength in the schematic of FIG. 2.
FIG. 8 is an optical schematic of the disclosed laser system;
FIG. 9 is a total gain of all Yb⁺³ ions at 1 µm parasitic wavelength in the schematic of FIG. 8.
FIG. 10 an optical schematic illustrating the inventive fiber laser system of FIG. 8 operating in a master oscillator power fiber amplifier configuration.
FIG. 11 is an optical schematic of the inventive fiber laser system of FIG. 9 pumping gain medium which is doped with ions of Tm.
FIG. 12 illustrates the dependence of lasing threshold on temperature.

### SPECIFIC DESCRIPTION

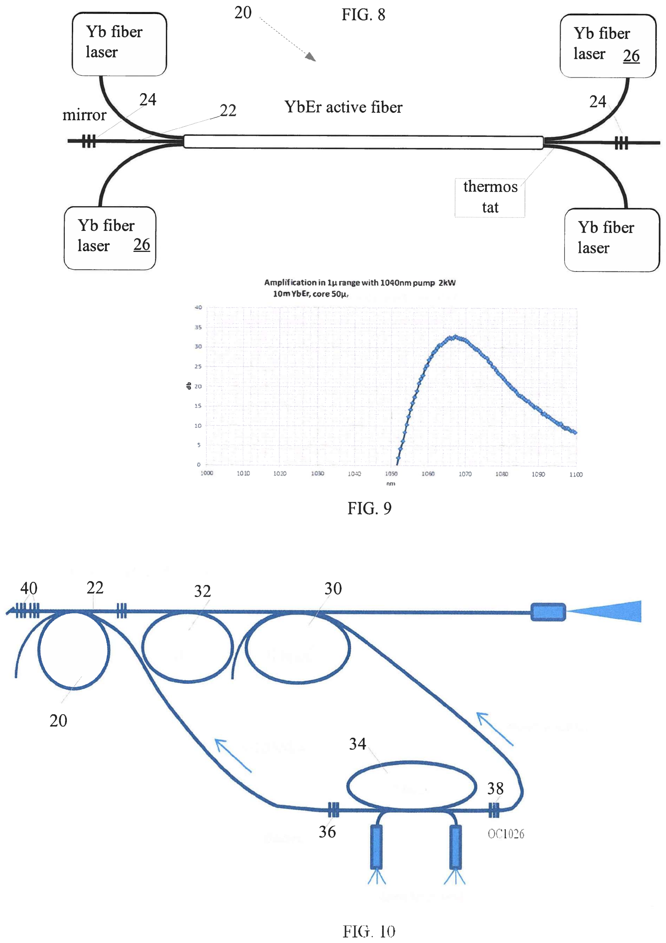

FIG. 8 illustrates the inventive schematic of MM Er fiber laser or amplifier 20 based on a double clad Yb:Er doped fiber 22 which is placed in a resonant cavity defined between MM wavelength reflectors 24. In contrast to the known art, Er fiber laser is clad pumped by a pump source, such as a Fabry-Perrot Yb fiber laser operating at a 1020 - 1060 nm pump wavelength or neodymium (Nd) doped fiber laser at 1050 - 1060 nm pump wavelength, to output signal light around a 15xx nm wavelength. The pumping arrangement may be configured in accordance with a side-pumping or end pumping technique allowing unidirectional pumping in either one of opposite light propagating directions or, as shown, bidirectional pumping.

The exemplary fiber 22 of FIG. 8 is pumped by one or more MM Yb pump fiber lasers 26 side-pumping fiber 22 at a 1028 nm pump wavelength. The fiber 22 has a 50 µm MM core doped with Yb:Er ions and the length of about 10 meters. The 1 kW output at a 1570 nm signal wavelength in a QCW regime has been obtained without reaching parasitic generation of Yb⁺³ ions in a 1 µm wavelength range. In contrast, the same exemplary schematic in the configuration of FIG. 3, operating with a 960 - 970 nm pump, outputs maximum 300 - 400 W at the 1570 nm signal wavelength after which the parasitic generation in a 1 µm wavelength range is theoretically determined. Theoretically, if the 1 kW output at the 960 nm pump wavelength was attainable by using the configuration of FIG. 3, the total amplification in the 1 µm of all Yb⁺³ ions would exceeded 80 dB, as shown in FIG. 7. In contrast, theoretically, the inventive structure of FIG. 8 would have only a 32 dB total parasitic amplification for the same 1 kW output, as clearly seen in FIG. 9 for fiber 22 with the above as disclosed above.

FIG. 10 illustrates an optical schematic 30 utilizing the inventive QCW Yb:Er fiber laser at a 1020 - 1060 nm pump wavelength range in a master oscillator power fiber amplifier (MOPFA) configuration. Placed between Yb:Er fiber laser 20 and Yb:Er fiber amplifier or booster 30 is a filter 32 configured as a length of Yb-doped fiber further dealing with a parasitic signal in the 1 µm wavelength range at the output of fiber 22. The pump arrangement including an Yb fiber laser 34 is configured to pump both laser 20 and booster 30. The pumping of Yb:Er fibers is realized by providing resonant cavity of Yb pump 34 between two relatively weak wavelength reflectors 36 and 38 which allows pump light to be coupled into laser 20 and booster 30 with the pump light coupled into laser 20 being substantially weaker than that coupled into fiber booster 30. To prevent the unwanted leakage of signal light at 15xx nm wavelength from the cavity of laser 20, a combination of multiple MM strong wavelength reflectors 40 are installed along the upstream of Yb:Er fiber 22.

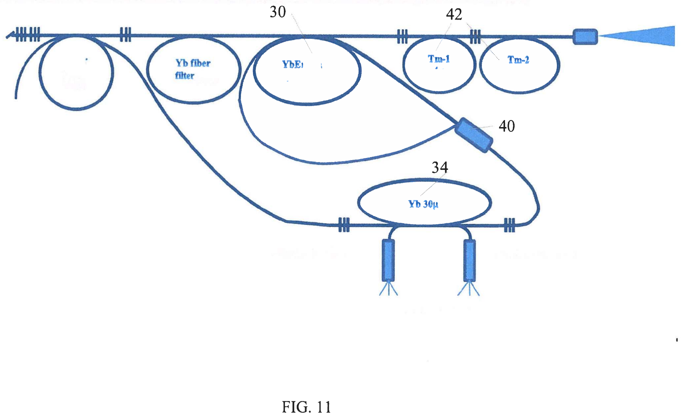

Turning to FIG. 11, the inventive Yb:Er fiber configuration may be utilized as a pump unit for Tm fiber laser system 42. The latter may be implemented as an individual Tm fiber laser or, as shown, in MOPFA configuration, or separate Tm fiber amplifier.

In summary, the 1020 - 1060 nm pump wavelength range allows reducing the gain of isolated Yb⁺³ ions and raising the threshold of parasitic generation in the 1 µm wavelength in 2-3 times in Yb:Er phosphate fibers.

The currently disclosed approach can help optimize the configuration of Yb:Er fiber for any given task. Typically, the maximum power of laser system and quality of light are set from the beginning. With these parameters known a priori, a maximum acceptable parasitic gain in the 1 µm wavelength range is determined. Depending on the concrete application of the Yb:Er lasers system, the acceptable parasitic gain may vary. For example, if the Yb:Er fiber laser is utilized as a pump for Tm-doped fibers, then the maximum acceptable gain in the 1 µm wavelength range can be higher than that of the Yb:Er fiber used for thermally treating materials which have reflective surfaces. As to the quality of light signal at the output of the Yb:Er fiber laser, it mostly depends on parameters of gain media, i.e., Yb:Er fibers, such as core dimeter, fiber length, core NA and others well known to one of ordinary skill in the laser arts.

Assume that for the desired output power of Yb:Er laser at a 15xx µm wavelength, a high power pump, operating at a 1 µm wavelength, is required. Typically, the pump efficiency is assumed to be 50% due to various light losses, i.e., for example, 1 kW system output at the 1550 nm requires roughly 2 kW of pump light at a 1 µm wavelength range.

In accordance with foregoing, there are two groups of Yb ions in Yb:Er media. The first group includes isolated Yb⁺³ ions which constitute no more than 5% of the total number of Yb⁺³ ions and have lifetime between 1 ms and 1.4 ms. The other group includes, for example, 95% of Yb⁺³ ions partaking in energy transfer to Er⁺³ ions with lifetime of tens of microseconds (µs). The absorption of pump light by the ions of Yb⁺³ is distributed as 5% to 95% with the latter being absorbed by the ions of the second energy transferring Yb⁺³ ions.

With the assumptions disclosed above, the level of inversion population in each of the Yb⁺³ ion groups is determined at the 2 kW pump output at a, for example, 1020 nm wavelength for the given fiber length. Then knowing the inversion population in both groups of Yb⁺³ ions, the respective gains of Yb⁺³ ions in both groups are determined and summed up. If the maximum parasitic gain exceeds the maximum acceptable level, then following steps can be undertaken.

First, the doped fiber length can be altered and recalculate the resulting gain of Yb⁺³ ions following the procedure disclosed above. However, the fiber length cannot be limitlessly increased since it can result in intolerant light losses and reduced laser efficiency.

Second, the pump wavelength is increased. For example, instead of 1020 nm wavelength use a 1030 nm wavelength. With the longer pump wavelengths, the population inversion of isolated Yb ions and therefore the gain in the unwanted wavelength range decrease. As a consequence, with the same 2 kW pump power, the population inversion of isolated Yb ions is reduced, whereas the population inversion of energy transferring Yb⁺³ ions remains unchanged. As a result, the unwanted total Yb gain in the 1 µm wavelength range is also reduced.

With the longer pump wavelength, the configuration of the Yb:Er fiber should be also reconsidered. For example, it may be necessary to reduce the cladding diameter from, for example, 200 µ to 150 µ.

FIG. 12 illustrates another important factor helping to minimize the parasitic generation at a 1 µm. Active Er:Yb fibers have a temperature close to the room temperature at the initial stage of laser operation. As the laser continues to work, the temperature of the gain medium rises. The parasitic generation in a 1 µm wavelength range is present at relatively cold temperatures during a so-called cold start. Yet, as the laser continues to operate and temperature goes up, this generation practically disappears. Accordingly, to even further minimize the parasitic generation in the 1 µm wavelength range, the inventive fiber laser system shown in FIG. 8 includes a thermostat controllable to maintain the temperature of Yb:Er fibers from the very beginning in a certain temperature range. The lowest limit of the range obviously should be higher than room temperature and the highest temperature obviously should not reach a level detrimental to the fiber's integrity. The range can be determined analytically or experimentally for each individual laser.

One of ordinary skill in the laser arts readily realizes that many different configurations of the disclosed individual fiber lasers can be easily implemented without departing from the intended scope of the invention. Obviously, the operational regime of the inventive structure is not limited to a QCW configuration and can be successfully used in both CW and pulsed regimes. All SM or low mode lasers, pumps and amplifiers can replace the above-disclosed MM devices. The pump arrangement, although preferably including fiber lasers, may instead include any other suitable pump. The disclosed signal light powers are only exemplary and certainly can and will be increased with optimization of pump powers and cooling arrangement.

Accordingly, it is to be understood that while the invention has been described in conjunction with the detailed description thereof, the foregoing description is intended to illustrate and not limit the scope of the invention, which is defined by the scope of the appended claims. Other aspects, advantages, and modifications are within the scope of the following claims.

## Claims

1. A fiber laser comprising:
a double clad fiber with a core doped with ions of Erbium (Er⁺³) and Ytterbium (Yb⁺³),
at least two spaced apart high and low reflection mirrors flanking the core and defining a resonant cavity therebetween; and
a pump laser generating radiation at a pump wavelength in a 1.02 -1.06 µm wavelength range, a pump laser outputting light in a 1.02 - 1.06 µm wavelength range coupled into the Yb:Er doped double clad fiber.

2. The fiber laser of claim 1, wherein the pump laser is is a single mode (SM) fiber laser or multimode (MM) fiber laser and configured as a Fabry-Perrot resonator or configured as MOPFA.

3. The fiber laser of claim 1, wherein the pump laser is selected from a bulk or semiconductor laser.

4. The fiber laser of claim 1, wherein the double clad fiber is end pumped or side-pumped and/or
wherein the core of double clad fiber is configured to support propagation of multiple transvers modes or single transverse mode.

5. A fiber amplifier comprising:
a double clad fiber with a core doped with ions of Erbium (Er⁺³) and Ytterbium (Yb⁺³); and
a pump laser generating radiation at a pump wavelength in a 1.02 -1.06 µm wavelength range, a pump laser outputting light in a 1.02 - 1.06 µm wavelength range coupled into the Yb:Er doped double clad fiber.

6. The amplifier of one of the above claims 5, wherein the pump laser is selected from a SM fiber or MM fiber laser having a Fabry-Perrot configuration.

7. The amplifier of claims 5, wherein the pump laser is bulk or semiconductor laser.

8. The amplifier of claim 5, wherein the fiber is end pumped or side-pumped and/or wherein the core is configured to support propagation of multiple transvers modes or single transverse mode.

9. A fiber laser system comprising:
a master oscillator power fiber amplifier (MOPFA) configuration including a Yb:Er fiber laser which seeds a Yb:Er fiber amplifier, at least one of or both the Yb:Er fiber laser and amplifier being based on a double clad optical fiber which is configured with a core doped with ions of Er ⁺³ and Yb⁺³, and a cladding surrounding the core; and
a pump laser outputting pump light in a 1.02 - 1.06 µm wavelength range coupled into an Yb:Er doped active fiber of at least one of master oscillator and amplifier.

10. The fiber laser system of claim 9, wherein the pump laser is a SM or MM fiber laser and configured with a Fabry-Perrot resonator or MOPFA architecture.

11. The fiber laser system of claim 9, wherein the pump laser is a bulk laser or semiconductor, the bulk laser being selected from Nd:YAG or Yb: YAG and/or
wherein the pump fiber laser energizes both the Yb:Er fiber laser and Yb:Er amplifier.

12. The fiber laser system of claims 9, wherein the Yb:Er fiber laser and amplifier have respective pump lasers and/or
wherein the Yb:Er fiber amplifier is unidirectionally pumped or bi-directionally pumped.

13. The fiber laser system of claim 9, wherein the active fiber is end pumped or side-pumped.

14. The fiber laser system of claim 9 further comprising a thermostat controllable to main a temperature of the Yb:Er doped active fiber above room temperature.
